# EUROPÄISCHE PATENTSCHRIFT

(11) **EP 2 143 647 B1**
(45) Veröffentlichungstag und Bekanntmachung des Hinweises auf die Patenterteilung: **07.01.2015**
(21) Anmeldenummer: 08017304.0
(22) Anmeldetag: 01.10.2008
(51) Int. Cl.: B29C 45/37, B65D 1/24, B29C 45/16

(54) **Kunststoffkasten mit einem Relief und Verfahren zur Herstellung des Kastens**
Plastic box with a relief and method for manufacturing the box
Caisson en matière plastique doté d'un relief et procédé de fabrication du caisson

(30) Priorität: 08.07.2008 DE 102008032106
(43) Veröffentlichungstag der Anmeldung: 13.01.2010
(73) Patentinhaber: Schoeller Allibert GmbH, 19057 Schwerin (DE)
(72) Erfinder: Oster, Heinz, 82319 Starnberg (DE); Gommer, Herman, 7761 DM Schoonebeek (NL); Lenz, Thorsten, 14055 Berlin (DE)
(74) Vertreter: Bockhorni & Kollegen

(56) Entgegenhaltungen:
- EP-A- 1 710 069
- DE-A1- 4 425 139
- DE-T2- 69 908 740
- DE-U1-202005 007 790
- US-A1- 2004 026 438

## Beschreibung

Die Erfindung betrifft einen Flaschenkasten gemäß dem Oberbegriff des Patentanspruches 1 und ein Verfahren gemäß dem Oberbegriff des Anspruches 8 zur Herstellung eines entsprechenden Kastens.

Es ist allgemein bekannt, dass Kästen, insbesondere Flaschen- oder Transportkästen üblicherweise aus Kunststoff in Spritzgussverfahren hergestellt werden. Sie weisen üblicherweise vier Seitenflächen auf, die auch als Werbefläche mit Produkthinweis und Herstellerangabe genutzt werden können. Zu diesem Zweck werden die Flächen beispielsweise mit einem Inmould-Label versehen.

Eine weitere Möglichkeit die Seitenflächen des Kastens als Werbefläche zu nutzen, ist ein Relief vorzusehen, das in Form einer oder mehrerer Erhöhungen bei der Herstellung des Kastens erzeugt werden kann. Ein Nachteil des Verfahrens besteht darin, dass das Relief nur in der Farbe ausgebildet ist, die das Kunststoffmaterial des Kastens aufweist, d.h. dass es einfarbig ist.

Reliefkonstruktionen in Form von Buchstaben und/oder Logos sind für Behälterdeckel bekannt (DE 20 2005 007 790 U1), bei denen das Relief durch den Behälterdeckel und die Inmoldfolie ausgebildet ist.

Ferner ist es aus der EP 1 710 069 A2 bekannt, in Ausnehmungen einer Kastenseitenwand eine Dekorfolie einzulegen, auf welcher eine bedruckte Folie aufgebracht ist. Zum Schutz der Inmoldfolie ist auf die Nahtstelle zwischen Folie und Seitenwand ein Rahmenelement aufgespritzt.

Aufgabe der Erfindung ist es, einen Kasten und ein Herstellungsverfahren für ein Kasten, insbesondere Flaschen- oder Transportkasten, anzugeben, der gegenüber dem Stand der Technik verbessert sein soll und insbesondere eine größere Gestaltungsfreiheit insbesondere der Seitenflächen zulässt, wobei der Kasten einfach und kostengünstig zu fertigen sein soll.

Diese Aufgabe wird erfindungsgemäß durch die in Anspruch 1 und Anspruch 8 genannten Merkmale gelöst, wobei zweckmäßige Weiterbildungen der Erfindung durch die Merkmale in den Unteransprüchen gekennzeichnet sind.

Die Erfindung betrifft einen Flaschenkasten mit einem Kastengrundkörper aus einem ersten Kunststoff mit vier Seitenwänden, wobei auf einem Bereich der zumindest einen Seitenwand eine Inmouldfolie angeordnet ist. Die Oberfläche der Inmouldfolie weist erfindungsgemäß ein Relief mit zumindest einer Erhöhung und zumindest einer Vertiefung auf. Vorzugsweise umfasst das Relief mehrere Erhöhungen und Vertiefungen. Ferner kann auch innerhalb einer Erhöhung eine umschlossene Vertiefung, eine so genannte innere Vertiefung, angeordnet sein. Auch die Geometrie der Struktur des Reliefs ist nicht begrenzt. Das Relief kann abgerundete, eckige oder sonstige Geometrien umfassen. Auf diese Weise können bspw. der Herstellername, ein Symbol oder Informationen in einer oder mehreren Ebenen einer dreidimensionalen Struktur auf einer oder mehreren Seitenwänden geformt werden. Aufgrund der unterschiedlichen farblichen Realisierung der Inmouldfolie ist es möglich, die dreidimensionale Struktur mit allen vorteilhaften Druckgestaltungsmöglichkeiten der Inmouldfolie, genannt auch IML-Folie, zu versehen.

Nach der Erfindung wird zumindest eine Vertiefung, die mit einer Inmouldfolie versehen ist, mindestens teilweise mit einem zweiten Kunststoff überdeckt, vorzugsweise in einem Spritzgussverfahren umspritzt. Der zweite Kunststoff weist vorteilhafterweise eine von dem ersten Kunststoffmaterial abweichende Farbe auf, so dass eine vorteilhafte zweifarbige Ausführung erreicht wird. Es ist aber auch die Verwendung eines Kunststoffs mit derselben Farbe oder desselben Kunststoffmaterials wie das erste Kunststoffmaterial, vorteilhaft, um die Herstellung zu vereinfachen. Die Überdeckung einer oder mehrerer Vertiefungen erfolgtvorzugsweise teilweise oder vollständig. Die Überdeckung der einen oder der mehreren Vertiefungen erfolgt vorzugsweise so, dass zumindest eine innen liegende Vertiefung zumindest teilweise oder vollständig mit dem zweiten Kunststoff überdeckt ist. Dabei bedeutet vollständig, dass abgesehen von einem ggf. vorgesehenen Randspalt die innen liegende Vertiefung vollständig ausgefüllt ist. Dies bietet den Vorteil einer großen Freiheit bei der Gestaltung einer Werbefläche auf einer Seitenwand des Flaschenkastens. Die Verwendung eines weiteren Kunststoffmaterials für das Relief ist vorteilhaft, da auf diese Weise eine größere Gestaltungsfreiheit geschaffen wird, beispielsweise durch Verwendung eines Kunststoffs mit einer anderen Farbe, welche durch eine transluzente Inmouldfolie zu erkennen ist. Vorzugsweise ist die Beschichtungsdicke der Beschichtung oder Überdeckung mit dem zweiten Kunststoff so groß oder mindestens so groß wie die Differenzhöhe zwischen Erhöhung und Vertiefung. Auf diese Weise wird erreicht, dass die Erhöhungen mit der Inmouldfolie nicht einem besonderen Verschleiß ausgesetzt werden. In einer anderen vorteilhaften Ausgestaltung ist die Höhe der Überdeckung geringer als die die Differenzhöhe zwischen Erhöhung und Vertiefung. Auf diese Weise wird eine zusätzliche Gestaltungsmöglichkeit geschaffen. Im Rahmen der Erfindung sind auch vorteilhafte Ausführungsformen möglich, bei denen verschiedene Beschichtungshöhen eingesetzt werden, um die Gestaltungsfreiheit zu erhöhen.

Die Höhe der Vertiefung bezogen auf den Bereich der Seitenwand, in dem kein Relief vorhanden ist, liegt vorzugsweise im Bereich von 0,1 mm bis 20 mm, insbesondere im Bereich von 0,2 bis 15 mm, bevorzugt bei 0,5 mm bis 2 mm. Die Höhe der Erhöhung bezogen auf die Vertiefungen liegt im Bereich von 0,1 mm bis 20 mm, insbesondere im Bereich von 0,2 mm bis 15 mm, bevorzugt bei 0,5 mm bis 2 mm.

Nach der Erfindung ist das Relief aus dem ersten Kunststoff geformt. Das bedeutet, dass das Relief bereits aus dem ersten Kunststoffmaterial ausgebildet wird. Eine weitere Möglichkeit ist, dass das Relief durch ein weiteres Material gebildet wird. Das weitere Material wird hierzu auf den ersten Kunststoff aufgebracht und bildet so den Untergrund für das dreidimensionale Relief. Das weitere Material kann der erste Kunststoff sein, allerdings in einem weiteren Verarbeitungsprozess getrennt aufgebracht. Das weitere Material ist vorteilhafterweise jedoch ein gegenüber dem ersten Kunststoff unterschiedliches Material, um einen haptischen Effekt zu erreichen. Das weitere Material kann auch an den entsprechenden Stellen auf die Inmouldfolie aufgebracht oder aufgetragen werden und dann zusammen mit der Inmouldfolie auf das erste Kunststoffmaterial aufgebracht werden.

Als zweiter Kunststoff ist auch ein Kunststoffmaterial vorteilhaft, das weicher oder elastischer als das erste Kunststoffmaterial ist, wodurch bei einer Reliefberührung ein angenehmes haptisches Gefühl erreicht werden kann. Auf das Relief ist eine Inmouldfolie aufgelegt, die mit dem Kastengrundkörper durch Heißverschmelzen fest, d.h. stoffschlüssig verbunden ist. Alternativ oder zusätzlich ist das Relief durch die Inmouldfolie geformt, d.h. die Inmouldfolie weist eine dreidimensionale Struktur auf. Es ist möglich, die Inmouldfolie mit einer dickeren Wandstärke auszulegen, so dass diese eine eigene Formstabilität erhält. Dies ermöglicht die Reliefbildung in der Inmouldfolie. Bevorzugte Dicken sind mehr als 50 µm, 100 µm, 300 µm oder mehr als 500 µm. Auch jegliche andere Kombinationen der oben genannten Gestaltungsmöglichkeiten des Reliefs sind möglich. Das Relief ermöglicht eine dreidimensionale Formgebung einer Struktur und die Inmouldfolie eine freie farbliche Gestaltung. Dadurch ergibt sich eine sehr gefällige Gestaltung eines solchen Kastens mit Mehrfarbenaufbau.

In einer bevorzugten Ausgestaltungsform der Erfindung ist die Inmouldfolie eine bedruckbare Folie. Damit lassen sich unterschiedliche farbliche Realisierungen der Kontur bzw. des Reliefs und sonstige gute graphische Effekte erzielen. Die Inmouldfolie ist vorteilhafterweise zumindest teilweise mit Glanzlack, insbesondere mit metallischem Effekt beschichtet. Um das Relief auch im Dunkeln sichtbar zu machen, ist die Folie vorzugsweise zumindest teilweise mit einer lumineszierenden Farbe bedruckt. Um Beschädigung der Inmouldfolie zu vermeiden, ist die Inmouldfolie vorzugsweise zum Schutz mit einem Kratzschutzüberzug, beispielsweise Kunstharz versiegelt. Besondere Vorteile ergeben sich, falls verschiedene Funktionen in einem Überzug vereinigt sind, beispielsweise ein Schutzüberzug, in den Pigmente eingebracht sind. Bevorzugte Ausführungsformen der Erfindung verwenden eine einfache Basisfolie aus Polypropylen oder Polyäthylen vorzugsweise ohne Beschichtung als Inmouldfolie. Der Vorteil ist, dass bei solchen Ausführungsformen auf eine Deckschicht oder einen Primer eventuell verzichtet werden kann, so dass die Herstellung des Kunststoffkastens erleichtert wird.

Die Überdeckung mit dem zweiten Kunststoff ist vorteilhafterweise so ausgeführt, dass die Erhöhungsbereiche vor der Überdeckung geschützt sind. Dadurch wird ein Überlaufen des zweiten Kunststoffmaterials in die Erhöhungsbereiche verhindert und eine trennscharfe Begrenzung zwischen dem Relief und dem zweitem Kunststoff ist gewährleistet. Im Überdeckungsbereich der Inmouldfolie mit dem zweiten Kunststoff ist die Folie hierbei vorzugsweise lackfrei ausgebildet, also ohne Lackierung versehen, um einen guten und sicheren Verbund der Folie mit der nachfolgenden Beschichtung aus zweitem Kunststoff zu erreichen. Zusätzlich ist sie im Bereich der Überdeckung mit dem zweiten Kunststoffmaterial zweckmäßigerweise mit einem Primer bzw. Haftvermittler beschichtet.

Die Erfindung bezieht sich ebenfalls auf ein Verfahren zur Herstellung eines Kastens aus Kunststoff in einem Spritzgussverfahren, bei dem im ersten Spritzgussschritt ein erster Kunststoff verwendet wird, und vor dem folgenden Spritzgussschritt eine Inmouldfolie auf einem Bereich der Seitenwand des Kastens angeordnet wird, wobei die Oberfläche der Inmouldfolie ein Relief mit zumindest einer Erhöhung und zumindest einer Vertiefung aufweist. Das Relief wird aus dem ersten Kunststoff gebildet. Alternativ wird es aus einem anderen Kunststoff oder durch eine Inmouldfolie geformt. Auch jegliche Kombinationen von den oben genannten Gestaltungsmöglichkeiten des Reliefs sind denkbar. Die Bildung des Reliefs aus dem ersten Kunststoff kann vorzugsweise im ersten Spritzgussschritt zusammen mit der Herstellung des Kastens erfolgen. Wird die Bildung des Reliefs in einem anderen Spritzgusswerkzeug durchgeführt als der erste Spritzgussschritt können Reliefstrukturen erzeugt werden, die beispielsweise Schrägen, Rundungen und verschiedene Geometrien umfassen. Ferner ist es dadurch möglich, einen Kasten, der schon vorher gefertigt wurde, auch mit Reliefstrukturen zu versehen. Durch unterschiedliche farbliche Realisierung der Folie und formunterschiedliche Realisierung des Reliefs ist es möglich ein höherwertiges Design des Kastens mit dem Relief kostengünstig zu erreichen.

Der Grundkörper des Kastens mit dem Relief kann in eine weitere Spritzgussform umgesetzt werden, die für das Anspritzen des zweiten Kunststoffs dient und in die Inmouldfolie eingelegt werden kann. Die Inmouldfolie, die auch als IML-Folie oder IML-Label bezeichnet wird, wird vorzugsweise durch Vakuum an dem Bereich der Seitenwand gehalten. Vorteilhafterweise wird ein Behandeln der Inmouldfolie zumindest in einem Teilbereich der Vertiefung vor dem folgenden Spritzgussschritt durchgeführt, so dass ein Anhaften des zweiten Kunststoffs begünstigt wird. Im Überdeckungsbereich wird die Folie vorzugsweise mit einem Primer bzw. Haftvermittler beschichtet, um einen guten und sicheren Verbund der Folie mit der nachfolgenden Beschichtung aus zweitem Kunststoff zu erreichen. Die Beschichtung oder Überdeckung mit dem zweiten Kunststoff kann so ausgeführt werden, dass die Erhöhungen der Reliefstruktur vor der Beschichtung geschützt werden. Dies ist beispielsweise durch Verwendung eines Stempels gewährleistet.

Vorzugsweise werden mehrere Kästen hergestellt, wobei für die mehreren Kästen mehrere Inmouldfolien aus einem vorgefärbten Band mit einem grafischen Muster herausgeschnitten werden, wobei das grafische Muster des Bandes so ausgeführt ist und das Band so zerschnitten wird, dass die mehreren Kästen jeweils mit einer Inmouldfolie mit unterschiedlich grafisch gestalteten Mustern versehen werden. Dies bietet den Vorteil, dass eine größere Gestaltungsfreiheit für mehrere Kästen einer Serie möglich ist, wobei beispielsweise eine Brauerei ihre Kästen individuell oder zumindest pseudo-individuell gestalten kann. Dabei bedeutet pseudo-individuell, dass nicht alle Kästen genau gleich gestaltet sind. So ist es möglich, mit demselben Relief auf unterschiedlichen Kästen verschiedene Farbgestaltungen zu erreichen, indem verschieden ausgestaltete Bandabschnitte des Bandes für die Kästen verwendet werden.

Nachfolgend wird ein bevorzugtes Ausführungsbeispiel der Erfindung anhand der Zeichnungen beschrieben. Darin zeigen
- Fig. 1: eine perspektivische Ansicht eines erfindungsgemäßen Kastens mit einer erhöht ausgebildeten Buchstabenfolge "A B C";
- Fig. 2: eine perspektivische Ansicht einer Inmouldfolie mit einer graphischen Darstellung der Buchstabenfolge "A B C"; und
- Fig. 3: eine perspektivische Ansicht einer Schicht aus dem zweiten Kunststoff, mit der Vertiefungen des Reliefs der Fig. 1 überdeckt sind.

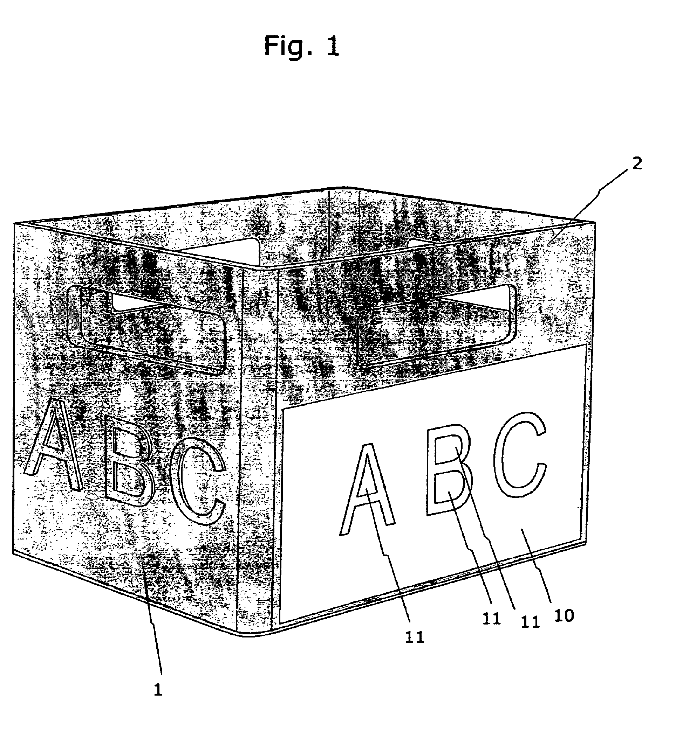

In der Fig. 1 ist ein erfindungsgemäßer Flaschenkasten 1 gezeigt. Der Flaschenkasten 1 umfasst einen Kastengrundkörper 2 aus einem ersten Kunststoff. Der Kastengrundkörper 2 weist vier Seitenwände auf, von denen in der perspektivischen Ansicht der Fig. 1 eine Außenfläche einer längeren Seitenwand und eine Außenfläche einer kürzeren Seitenwand zu sehen sind. Auf der Außenseite der kürzeren Seitenwand ist ein Relief zu erkennen, welches die Buchstaben "A", "B" und "C" umfasst. Die drei Buchstaben bilden Erhöhungen des Reliefs. Umgeben sind die Buchstaben von einer großflächigen Vertiefung und außerdem sind innerhalb der Buchstaben "A" und "B" innere Vertiefungen vorhanden. Sämtliche Vertiefungen, d.h. die großflächige umgebende Vertiefung, die beispielsweise auch in den Buchstaben "C" hineinragt, und die inneren Vertiefungen innerhalb der Buchstaben "A" und "B" sind auf demselben Niveau. Dies vereinfacht die Herstellung.

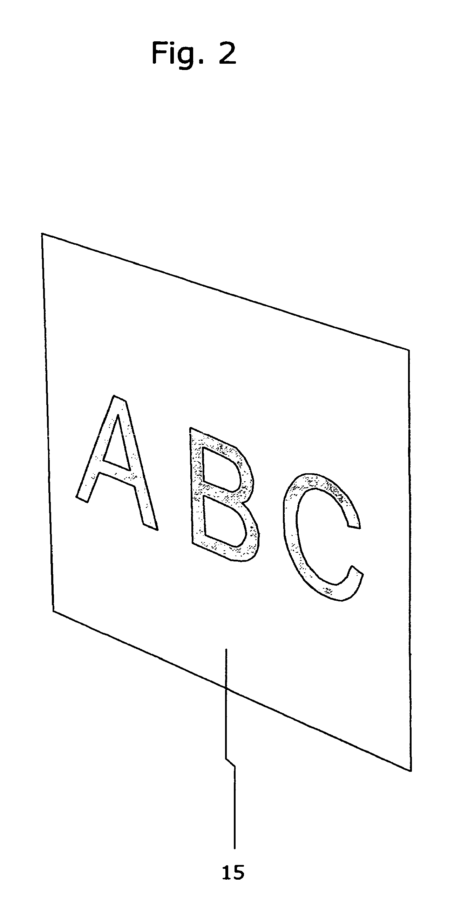

In der rechten Bildhälfte der Fig. 1 ist die Außenseite einer längeren Seitenwand des Kastengrundkörpers 2 zu sehen, wobei diese Seite mit einer Inmouldfolie (wird im Zusammenhang mit Fig. 2 erläutert) und Deckschichten 10, 11 versehen ist. Die Deckschichten 10, 11 bilden eine Überdeckung oder Beschichtung und umfassen eine groß-flächige, umgebende Deckschicht 10, welche die großflächige außen liegende Vertiefung, welche die Buchstaben "A", "B" und "C" umgibt, überdeckt. Weiterhin umfassen die Deckschichten 10, 11 innen liegende Deckschichten 11, welche innerhalb der Buchstaben "A" und "B" angeordnet sind. Die Deckschichten 10, 11 bestehen aus einem zweiten Kunststoff, welcher sich farblich von dem ersten Kunststoff des Kastengrundkörpers 2 unterscheidet. Zwischen den Deckschichten 10, 11 und dem Kastengrundkörper 2 ist eine Inmouldfolie angeordnet, welche mit angebrachten Deckschichten 10, 11 lediglich im Bereich der Erhöhungen der Buchstaben "A", "B" und "C" zu sehen ist. Die Deckschichten 10, 11 aus dem zweiten Kunststoff schließen bündig mit den Erhöhungen ab.

Bei typischen Ausführungsformen werden die Erhöhungen und die Dicke der Deckschichten derart ausgebildet, dass eine bündige Oberfläche der Erhöhungen mit der Deckschicht entsteht. Alternativ oder auch ergänzend bei ein und demselben Flaschenkasten ist es möglich, die Erhöhungen so auszubilden, dass sie über die Deckschicht hinaus stehen. Ebenso kann es vorteilhaft sein, dass die Erhöhungen so ausgebildet sind, dass sie gegenüber der Deckschicht zurückversetzt sind. Auf diese Weise wird beispielsweise eine Beschädigung der Inmouldfolie, welche lediglich auf den Erhöhungen zu Tage tritt, vermieden. Ebenso könnten die außen liegende, umgebende Deckschicht und die außen liegende, umgebende Vertiefung in dem Kastengrundkörper so ausgeführt sein, dass am Rand der großflächigen, außen liegenden Vertiefung in dem Kastengrundkörper eine Stufe vorgesehen ist, welche der Dicke der außen liegenden Deckschicht entspricht. Auf diese Weise wird wiederum eine bündige Oberfläche erreicht. Es ist jedoch ebenso möglich, andere Maße zu wählen oder auch gar keine Stufe in dem Kastengrundkörper vorzusehen, so dass die außen liegende Deckschicht mit ihrer Dicke vollständig über den Kastengrundkörper 2 erhaben ist.

In der Fig. 1 ist von den zwei sichtbaren Außenflächen von Seitenwänden lediglich die eine mit einer Inmouldfolie und mit Deckschichten versehen. Die andere Seitenwand weist keine aufgebrachte Inmouldfolie und keine Deckschicht auf. Es ist jedoch auch möglich, auf der anderen Seitenwand ebenfalls eine Inmouldfolie und eine Deckschicht aufzubringen. Außerdem ist es möglich, einige Seitenwände lediglich mit einer Inmouldfolie und andere mit einer Inmouldfolie und einer Deckschicht zu versehen oder andere Kombinationen zu verwirklichen. Von der Erfindung ebenfalls umfasst sind Ausführungsformen, bei welchen die dreidimensionale Struktur des Reliefs nicht durch den Kastengrundkörper gebildet wird, sondern durch eine Inmouldfolie mit einer dreidimensionalen Ausdehnung. Ebenso sind Kombinationen möglich, d.h. es kann sowohl ein Relief auf dem Kastengrundkörper ausgebildet sein als auch auf der Inmouldfolie.

In der Fig. 2 ist eine Inmouldfolie 15 gezeigt, wie sie für die zweite noch nicht bedeckte Seitenwand des Kastengrundkörpers 2 der Fig. 1 verwendet werden kann. Die im Rahmen der Erfindung verwendete Inmouldfolie 15 unterscheidet sich gegenüber herkömmlichen bei Flaschenkästen verwendeten Folien dadurch, dass die Inmouldfolie 15 in dem Bereich der späteren Vertiefungen, d.h. alle Bereiche, welche nicht durch das Schriftbild der Buchstaben "A", "B" und "C" eingenommen werden, derart oberflächenbehandelt ist, dass ein späteres Anhaften des zweiten Kunststoffs der Deckschicht begünstigt ist. Hierzu können verschiedene Maßnahmen ergriffen werden, beispielsweise kann die Folie mit einem Primer versehen werden oder thermisch behandelt werden, bevor der zweite Kunststoff aufgebracht wird. Dies ist besonders wichtig im Bereich der Folie, welche in den späteren innen liegenden Vertiefungen zu liegen kommt, da in diesen Bereichen die spätere Deckschicht (in der Fig. 1: Bezugszeichen 11) lediglich durch ein Anhaften an der Inmouldfolie gehalten ist.

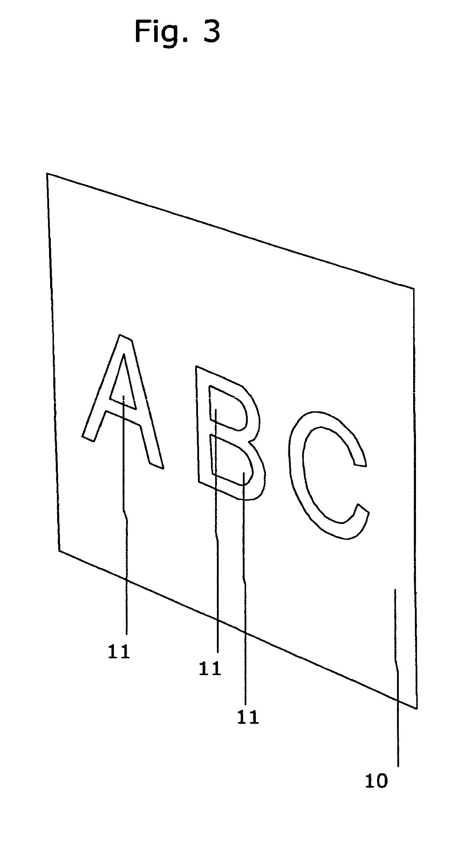

Die Fig. 3 zeigt schematisch die spätere Deckschicht für die noch unbedeckte Seitenwand der Fig. 1. Die Deckschicht der Fig. 3 umfasst eine außen liegende Deckschicht 10 und innen liegende Deckschichten 11. Diese wurden bereits im Zusammenhang mit der Fig. 1 erläutert, wobei zwischen den Deckschichten der beiden Seitenwände keine nennenswerten Unterschiede bestehen, außer dass sie geometrisch unterschiedlich geformt sind. Die Deckschichten werden vorzugsweise direkt an den späteren Flaschenkasten angespritzt, d.h. direkt auf die Inmouldfolie aufgespritzt, die Fig. 3 zeigt demnach herausgelöste Deckschichten, d.h. einen Ausschnitt einer Explosionsdarstellung. Die Form der Deckschichten ergibt sich dabei aus den Formwerkzeugen. Einzelheiten werden im Folgenden mit dem bevorzugten Herstellvorgang beschrieben, wobei in der Beschreibung des bevorzugten Herstellvorgangs ebenfalls auf die Fig. 1 und 2 Bezug genommen wird.

Zunächst wird in einer ersten Spritzgussform aus einem ersten Kunststoff der Kastengrundkörper 2 (Fig. 1) hergestellt. Dieser Kastengrundkörper 2 umfasst ein Relief, welches beispielsweise eine Herstellerangabe enthalten kann. Der Kastengrundkörper wird der ersten Spritzgussform entnommen und in eine zweite Spritzgussform umgesetzt. Dabei wird in der zweiten Spritzgussform auch die Inmouldfolie an dem Kastengrundkörper angebracht und durch Vakuum an dem Relief gehalten. Die Inmouldfolie liegt dann über dem Relief und deckt im Wesentlichen den Bereich ab, der später durch einen zweiten Kunststoff abgedeckt wird, mit Ausnahme der Erhöhungen des Reliefs. Anschließend wird in die zweite Spritzgussform der zweite Kunststoff eingespritzt, der vorzugsweise eine andere Farbe oder andere Materialeigenschaften zum Erreichen einer unterschiedlichen Optik aufweist. Die Erhöhungen des Reliefs, in der Fig. 1 die Buchstaben "A", "B" und "C", werden während des Spritzens in der zweiten Spritzgussform mit einem Stempel, welcher dem Umriss des Reliefs entspricht, abgedeckt, so dass der zweite Kunststoff bei dem zweiten Spritzgießvorgang exakt nur die Bereiche ausfüllt, die vertieft liegen.

Bei typischen Ausführungsformen wird die Inmouldfolie von einem längeren, bereits vorgefärbten Band herunter geschnitten, wobei das Band eine Länge aufweist, so dass aus ihm mehrere Inmouldfolien für Flaschenkästen gewonnen werden können. Das Band wiederholt sich jedoch grafisch nicht exakt, vielmehr weisen verschiedene von dem Band herunter geschnittene Inmouldfolien für die Flaschenkästen unterschiedliche grafische Gestaltungen auf.

## Patentansprüche

1. Flaschenkasten mit einem Kastengrundkörper (2) aus einem ersten Kunststoff mit vier Seitenwänden, wobei auf einem Bereich von zumindest einer Seitenwand eine Inmouldfolie (15) angeordnet ist,
die Oberfläche der auf der Seitenwand angeordneten Inmouldfolie (15) ein Relief aufweist, welches aus zumindest einer Erhöhung und Vertiefung gebildet ist, wobei das Relief durch den ersten Kunststoff und/oder durch ein weiteres Material und/oder durch die Inmouldfolie (15) gebildet ist,
**dadurch gekennzeichnet, dass** die zumindest eine Vertiefung mindestens teilweise mit einer Überdeckung aus einem zweiten Kunststoff überdeckt, vorzugsweise umspritzt ist, und dass die zumindest eine Erhöhung frei von der Überdeckung mit dem zweiten Kunststoff ist,

2. Kasten (1) nach Anspruch 1,
**dadurch gekennzeichnet, dass**
die Inmouldfolie (15) zumindest in einem Teilbereich der Vertiefung (4) so ausgeführt ist, dass ein Anhaften des zweiten Kunststoffs begünstigt ist.

3. Kasten (1) nach Anspruch 1 oder Anspruch 2,
**dadurch gekennzeichnet, dass**
die Dicke der Inmouldfolie (15) größer als 50 µm ist.

4. Kasten (1) nach einem der vorhergehenden Ansprüche,
**dadurch gekennzeichnet, dass**
die Inmouldfolie (15) eine bedruckbare Folie ist.

5. Kasten (1) nach einem der vorhergehenden Ansprüche,
**dadurch gekennzeichnet, dass**
dass der zweite Kunststoff eine andere Farbe aufweist oder aus einem anderen Material als der erste Kunststoff gebildet ist.

6. Kasten (1) nach einem der vorherigen Ansprüche,
**dadurch gekennzeichnet, dass**
mehrere Erhöhungen und mehrere Vertiefungen vorgesehen sind.

7. Kasten (1) nach einem der vorherigen Ansprüche,
**dadurch gekennzeichnet, dass**
die Erhöhungen und die Dicke der Überdeckung derart ausgebildet ist, dass eine bündige Oberfläche der Erhebungen mit der Überdeckung entsteht, oder die Erhöhungen so ausgebildet sind, dass sie über die Überdeckung hinausstehen oder gegenüber der Überdeckung zurückversetzt sind.

8. Verfahren zur Herstellung eines Kastens (1), insbesondere eines Flaschen- oder Transportkastens, umfassend die folgenden Schritte:
- Herstellung eines Kastengrundkörpers (2) mit zumindest einer Seitenwand aus einem ersten Kunststoff in einem ersten Spritzgussschritt; und
- Anordnung einer Inmouldfolie (15) auf einem Bereich der Seitenwand des Kastens (1),
wobei die Oberfläche der Inmouldfolie (15) ein Relief mit zumindest einer Erhöhung und zumindest einer Vertiefung aufweist,
**dadurch gekennzeichnet, dass**
in einem folgenden Spritzgussschritt die zumindest eine Vertiefung zumindest teilweise mit einem zweiten Kunststoff umspritzt wird, wobei dieser folgende Spritzgussschritt mit dem zweiten Kunststoff so ausgeführt wird, dass die zumindest eine Erhöhung nicht beschichtet wird.

9. Verfahren nach Anspruch 8,
**dadurch gekennzeichnet, dass**
der folgende Spritzgussschritt in einem anderen Spritzgusswerkzeug durchgeführt wird als der erste Spritzgussschritt.

10. Verfahren nach Anspruch 8 oder 9,
**gekennzeichnet durch**
Behandeln der Inmouldfolie (15) zumindest in einem Teilbereich der Vertiefung vor dem folgenden Spritzgussschritt, so dass ein Anhaften des zweiten Kunststoffs begünstigt wird.

11. Verfahren nach einem der Ansprüche 8 bis 10,
**dadurch gekennzeichnet, dass**
vor dem folgenden Spritzgussschritt die Inmouldfolie (15) durch Vakuum an dem Bereich der Seitenwand gehalten wird.

12. Verfahren nach einem der Ansprüche 8 bis 11,
**dadurch gekennzeichnet, dass**
mehrere Kästen (1) hergestellt werden, wobei für die mehreren Kästen (1) mehrere Inmouldfolien (15) aus einem vorgefärbten Band mit einem graphischen Muster herausgeschnitten werden, wobei das graphische Muster des Bandes so ausgeführt ist und das Band so zerschnitten wird, dass die mehreren Kästen (1) jeweils mit einer Inmouldfolie (15) mit unterschiedlich graphisch gestaltetem Muster versehen werden.

## Claims

1. A bottle crate with a crate base body (2) from a first plastic with four side walls with an inmould foil (15) being arranged in the area of at least one sidewall,
wherein the surface of the inmould foil (15) which is arranged at the sidewall has a relief, which is formed from at least an increase and a recess, with the relief being formed from the first plastic and/or a further material and/or from the inmould foil (15),
**characterized in that** the at least one recess is covered at least partially with a cover of a second plastic, preferably moulded, and that the at least one increase is free from the cover with the second plastic.

2. The crate (1) according to claim (1)
**characterized in that**
at least in a section of the recess (4), the inmould foil (15) is carried out such that an adhesion of the second plastic is promoted.

3. The crate (1) according to claim 1 or claim 2,
**characterized in that**
the thickness of the inmould foil (15) is higher than 50 µm.

4. The crate (1) according to one of the preceding claims,
**characterized in that**
the inmould foil (15) is a printable foil.

5. The crate (1) according to one of the preceding claims
**characterized in that**
the second plastic has another colour or is formed from another material than the first plastic.

6. The crate (1) according to one of the preceding claims
**characterized in that**
several increases and several recesses are provided.

7. The crate (1) according to one of the preceding claims,
**characterized in that**
the increases and the thickness of the cover is formed such that a flush surface of the increases with the cover arises, or that the increases are formed such that they protrude the cover or are set back compared with the cover.

8. A method for producing a crate (1), in particular a bottle crate or transporting crate, comprising the following steps:
- production of a crate base body (2) with at least one side wall from a first plastic in a first injection-moulding step; and
- arrangement of an inmould foil (15) on a region of the side wall of the crate (1), with the surface of the inmould foil (15) having a recess with at least one increase and at least one recess,
**characterized in that**
in a subsequent injection-moulding step the at least one recess is at least partially moulded with a second plastic, with this subsequent injection-moulding step with the second plastic being carried out such that the at least one increase is not covered.

9. The method according to claim 8,
**characterized in that**
the subsequent injection-moulding step is carried out in another injection-moulding tool as the first injection-moulding step.

10. The method according to claim 8 or 9,
**characterized by**
treating the inmould foil (15) at least in one section of the recess before the subsequent injection-moulding step, so that an adhesion of the second plastic is promoted.

11. The method according to one of the claims 8 to 10,
**characterized in that**
before the subsequent injection-moulding step, the inmould foil (15) is held at the area of the sidewall through a vacuum.

12. The method according to one of the claims 8 to 11,
**characterized in that**
several crates (1) are produced, with several inmould foils (15) from a pre-coloured tape with a graphical pattern is cut out for the several crates (1), with the graphical pattern of the tape being carried out and the tape being cut such that the several crates (1) are each provided with an inmould foil (15) with differently designed graphical patterns.

## Revendications

1. Caisse à bouteilles comprenant un corps de base de caisse (2) en une première matière plastique ayant quatre parois latérales, sur une zone d'au moins une paroi latérale étant disposée une feuille d'étiquetage dans le moule (15), la surface de ladite feuille d'étiquetage dans le moule (15) disposée sur la paroi latérale présentant un relief qui est formé d'au moins une saillie et d'au moins un creux, ledit relief étant formé par ladite première matière plastique et/ou par une autre matière et/ou par ladite feuille d'étiquetage dans le moule (15), **caractérisée par le fait que** ledit au moins un creux est recouvert au moins en partie, de préférence surmoulé par injection, d'un recouvrement en une deuxième matière plastique et que ladite au moins une saillie est dépourvue dudit recouvrement avec la deuxième matière plastique.

2. Caisse (1) selon la revendication 1, **caractérisée par le fait que** ladite feuille d'étiquetage dans le moule (15) est réalisée au moins dans une zone partielle du creux (4) de telle sorte qu'une adhérence de la deuxième matière plastique soit favorisée.

3. Caisse (1) selon la revendication 1 ou la revendication 2, **caractérisée par le fait que** l'épaisseur de la feuille d'étiquetage dans le moule (15) est supérieure à 50 µm.

4. Caisse (1) selon l'une quelconque des revendications précédentes, **caractérisée par le fait que** la feuille d'étiquetage dans le moule (15) est une feuille imprimable.

5. Caisse (1) selon l'une quelconque des revendications précédentes, **caractérisée par le fait que** la deuxième matière plastique présente une couleur différente ou est formée d'une autre matière que la première matière plastique.

6. Caisse (1) selon l'une quelconque des revendications précédentes, **caractérisée par le fait que** plusieurs saillies et plusieurs creux sont prévus.

7. Caisse (1) selon l'une quelconque des revendications précédentes, **caractérisée par le fait que** les saillies et l'épaisseur du recouvrement sont réalisées de manière à créer une surface à fleur des saillies avec le recouvrement ou que les saillies sont réalisées de manière à dépasser le recouvrement ou à être en retrait par rapport au recouvrement.

8. Procédé de fabrication d'une caisse (1), en particulier d'une caisse à bouteilles ou de transport, comprenant les étapes suivantes :
- fabriquer, dans une première étape de moulage par injection, un corps de base de caisse (2) ayant au moins une paroi latérale en une première matière plastique ; et
- disposer une feuille d'étiquetage dans le moule (15) sur une zone de la paroi latérale de la caisse (1),
dans lequel la surface de ladite feuille d'étiquetage dans le moule (15) présente un relief ayant au moins une saille et au moins un creux,
**caractérisé par le fait que**, dans une étape suivante de moulage par injection, ledit au moins un creux est surmoulé par injection, au moins en partie, d'une deuxième matière plastique, cette étape suivante de moulage par injection réalisée avec la deuxième matière plastique étant effectuée de manière à ne pas revêtir ladite au moins une saillie.

9. Procédé selon la revendication 8, **caractérisé par le fait que** ladite étape suivante de moulage par injection est réalisée dans un autre moule pour injection que la première étape de moulage par injection.

10. Procédé selon la revendication 8 ou 9, **caractérisé par** le traitement de la feuille d'étiquetage dans le moule (15) au moins dans une zone partielle du creux, avant ladite étape suivante de moulage par injection de sorte qu'une adhérence de la deuxième matière plastique soit favorisée.

11. Procédé selon l'une quelconque des revendications 8 à 10, **caractérisé par le fait que**, avant ladite étape suivante de moulage par injection, la feuille d'étiquetage dans le moule (15) est maintenue par vide contre la zone de la paroi latérale.

12. Procédé selon l'une quelconque des revendications 8 à 11, **caractérisé par le fait que** plusieurs caisses (1) sont fabriquées, pour lesdites plusieurs caisses (1) étant découpées plusieurs feuilles d'étiquetage dans le moule (15) dans une bande pré-colorée ayant un motif graphique, le motif graphique de ladite bande étant réalisé de manière et ladite bande étant découpée de manière à ce que lesdites plusieurs caisses (1) soient pourvues chacune d'une feuille d'étiquetage dans le moule (15) ayant un motif réalisé d'une manière graphiquement différente.
